Europäisches Patentamt

(19) European Patent Office

Office européen des brevets

(11) **EP 0 500 453 B1**

(12) **FASCICULE DE BREVET EUROPEEN**

(45) Date de publication et mention
de la délivrance du brevet:
**17.12.1997 Bulletin 1997/51**

(51) Int. Cl.⁶: **B21B 37/00**, G01N 23/207

(21) Numéro de dépôt: **92400428.6**

(22) Date de dépôt: **18.02.1992**

(54) **Procédé de mesure non destructive en ligne d'une caractéristique d'un produit fabriqué en continu, et dispositif associé**

Verfahren zur zerstörungsfreien on-line-Messung einer Charakteristik eines kontinuierlich hergestellten Produktes und entsprechende Vorrichtung

Method for non-destructive on-line measuring of a characteristic of a continuously manufactured product, and associated apparatus

(84) Etats contractants désignés:
AT BE CH DE DK ES FR GB GR IT LI LU NL PT SE

(30) Priorité: **19.02.1991 FR 9101958**

(43) Date de publication de la demande:
**26.08.1992 Bulletin 1992/35**

(73) Titulaire: **SOLLAC**
**92800 Puteaux (FR)**

(72) Inventeurs:
• **Friedrich, Marc**
**F-57070 Metz Vallieres (FR)**
• **Marez, Jean-Jacques**
**F-57700 Hayange (FR)**
• **Lebrun, Jean-Lou**
**F-91120 Palaiseau (FR)**
• **Michaud, Hervé Pierre**
**F-42100 Saint-Etienne (FR)**

(74) Mandataire: **Polus, Camille et al**
**c/o Cabinet Lavoix**
**2, Place d'Estienne d'Orves**
**75441 Paris Cedex 09 (FR)**

(56) Documents cités:
EP-A- 0 145 547      DE-A- 2 434 151
DE-B- 2 036 334      FR-A- 2 464 106

• PATENT ABSTRACTS OF JAPAN vol. 5, no. 21 (P-48)(693), 7 février 1981; & JP - A - 55149031 (HITACHI SEISAKUSHO K.K.) 20.11.1980
• MATERIAUX ET TECHNIQUES Septembre 1988, pages 5-12, Paris, FR; G. MAEDER: "Développements actuels de la détermination des contraintes par diffraction des rayons X"

**Description**

La présente invention a trait à la fabrication en continu d'un produit en défilement sous forme de bande, profilé, fil ou analogue, tel que des produits métallurgiques.

Elle concerne plus particulièrement la détection ou la mesure rapides, par voie non destructive, d'une caractéristique difficilement mesurable en continu d'un tel produit au cours de sa fabrication de façon à pouvoir effectuer un contrôle de qualité, ou réguler le processus de fabrication afin de contrôler la caractéristique difficilement mesurable.

Lors de la fabrication de tels produits, il est nécessaire de mesurer, en vue d'un contrôle ou d'une régulation, des caractéristiques difficilement mesurables en continu. C'est en particulier le cas de caractéristiques telles que la planéité ou la limite d'élasticité, par exemple. Habituellement pour faire une mesure de ces caractéristiques, l'homme de métier est amené à prélever des échantillons sur le produit et à faire des mesures hors de la ligne de fabrication, donc en différé. Cette façon de procéder présente plusieurs inconvénients, parmi lesquels :

- la nécessité de prélever un échantillon et donc découpe de cet échantillon ce qui peut interrompre le caractère continu de la fabrication ;
- l'impossibilité de faire de la régulation en continu.

On connaît de EP-A-0 145 547 l'art antérieur le plus proche un dispositif de mesure en continu de la tension longitudinale d'une bande en sortie d'un laminoir.

L'invention a pour but de s'affranchir de ces inconvénients en permettant de mesurer, sur la ligne de fabrication, de manière non destructive et rapide, une caractéristique difficilement mesurable en continu d'un produit fabriqué en continu sous forme de bande, profilé, ou analogue, tel qu'un produit métallurgique. L'invention se caractérise par la combinaison des caractéristiques selon la revendication 1.

Lorsque la deuxième caractéristique, mesurable en continu, a une valeur connue en soi soit avant ladite zone soit après celle-ci, les mesures de cette dite deuxième caractéristique soit avant soit après ladite zone, ne sont plus nécessaires, et le procédé peut être mis en oeuvre en ne faisant qu'une mesure de ladite deuxième caractéristique dans ladite zone.

On peut faire deux mesures de ladite deuxième caractéristique en deux points différents de ladite zone et, éventuellement, en deux points différents situés soit avant soit après ladite zone, les points de mesure situés dans ladite zone et situés hors de cette zone étant tels que, lors du défilement du produit, les mesures situées dans ladite zone et hors de celle-ci puissent être associées. Dans le cas d'une bande, ces points peuvent être, d'une part, des points situés dans l'axe de défilement de la bande et, d'autre part, des points situés sur une ligne parallèle à cet axe mais décalée par rapport à celui-ci.

L'invention permet donc d'obtenir un contrôle en continu d'un produit à la sortie d'un processus de traitement en continu, de manière à contrôler une caractéristique physique dudit produit.

L'invention permet également de réaliser une régulation d'une caractéristique d'un produit sous forme de bande, profilé, fil ou analogue fabriqué dans une installation de traitement en continu.

L'invention s'applique en particulier mais non exclusivement au contrôle et/ou à la régulation de la planéité globale d'un produit de laminage, tel qu'une bande d'acier ayant subi une opération de planage dans une installation de planage. Dans ce cas, la deuxième caractéristique est les contraintes superficielles sur au moins une zone de ladite bande et à partir de cette mesure, on détermine les valeurs représentatives du défaut de planéité (cintres et/ou tuiles) que le produit présenterait en l'absence de tension.

Selon un mode de réalisation préféré, on détermine les contraintes superficielles du produit par la mesure d'une grandeur caractéristique de la diffraction de rayons X et représentative de la contrainte.

Selon ce mode de réalisation, on mesure l'angle de Bragg sur les deux faces du produit et on l'on détermine une valeur différentielle de l'angle de Bragg.

L'invention a également pour objet un dispositif selon la revendication 13 pour la mise en oeuvre du procédé précité.

Dans un deuxième dispositif selon la revendication 14, on utilise des détecteurs linéaires de rayons X pour mesurer l'angle de Bragg.

L'invention concerne également un procédé de correction de la mesure pour tenir compte de déplacements du produit au cours de ladite mesure.

La présente invention sera mieux comprise à l'aide de la description qui va suivre, donnée uniquement à titre d'exemples et faite en se référant aux dessins annexés sur lesquels:

- les figures 1 et 2 sont des schémas explicatifs du principe général de l'invention ;
- les figures 3 et 4 sont des schémas explicatifs de l'invention en application à la mesure de défauts de planéité d'une tôle, la mesure s'effectuant en amont d'une installation de planage sous tension ;
- la figure 5 est un schéma simplifié d'un dispositif ;

- la figure 6 est une vue de détail d'un dispositif de mesure ;
- la figure 7 est une courbe représentant la différentielle de contrainte en fonction de la valeur du cintre résiduel ;
- la figure 8 est une courbe représentant la différentielle de l'angle de Bragg pour les mêmes valeurs de cintre ;
- la figure 9 est le schéma d'un dispositif de mesure de l'angle de Bragg comportant un dispositif de corrections de positions de la tôle ; et
- la figure 10 est un schéma de principe d'un dispositif à détecteur linéaire de rayons X permettant l'évaluation de contraintes basé sur la mesure de l'angle de Bragg avec un montage "en oméga", pour deux valeurs d'incidence $\Psi$.

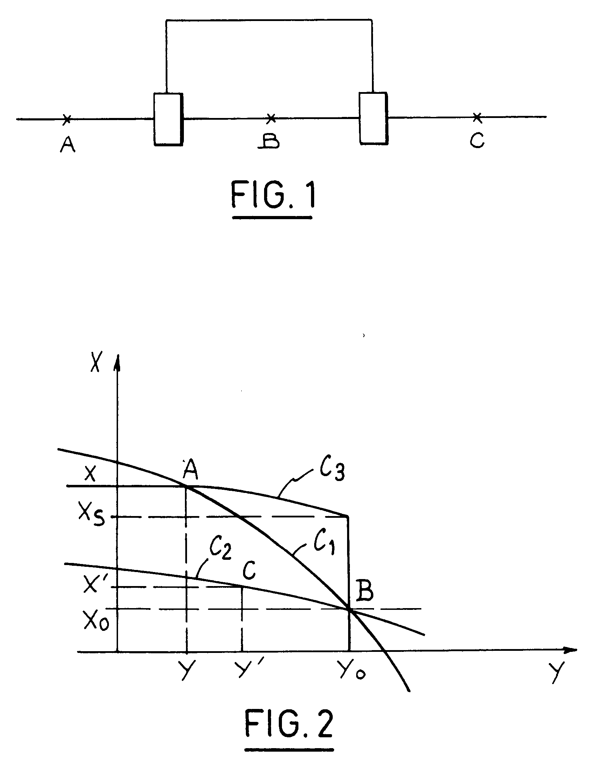

En se référant à la figure 1, on considère un processus de fabrication en continu d'un produit défilant de la gauche vers la droite.

Au point A, le produit sort du processus de fabrication continue avec une première caractéristique X ayant une valeur que l'on veut contrôler mais qui n'est pas mesurable en continu ; il sort également avec une deuxième caractéristique Y ayant une valeur que l'on peut mesurer en continu.

En aval du point A, en faisant agir un processus soit mécanique, soit thermique, soit magnétique, soit électrique, soit de tout autre nature, et qui agisse simultanément sur les caractéristiques X et Y, on amène le produit dans un état de référence tel que, au point B, la première caractéristique ait une valeur connue en soi $X_0$ et la deuxième caractéristique une valeur mesurable $Y_0$.

En aval de ce processus, le produit redevient "libre" et la première caractéristique revient à une valeur X' et la deuxième caractéristique à une valeur Y'.

Comme l'indique la figure 2, les premières et deuxièmes caractéristiques sont corrélées entre elles lorsque l'on met en oeuvre le processus. Trois cas de figure ont été représentés. La courbe C1 correspond à un processus réversible ; X varie régulièrement avec Y.

La courbe C3 correspond à un processus présentant un effet de saturation et la courbe présente une partie verticale lorsque le processus a amené X à une valeur $X_s$. Il existe également des processus à seuil dans lesquels la courbe $X = f(Y)$ présente d'abord une partie horizontale puis une partie où X est variable avec Y. De tels processus peuvent être utilisés dans le cadre de la présente invention.

La courbe C2 correspond au comportement du produit à la sortie du processus. Cette courbe est identique à la courbe C1 lorsqu'il n'y a pas d'irréversibilité mais correspond par exemple à la partie non verticale de la courbe C3 lorsque le processus est partiellement irréversible ce qui conduit à un effet de saturation. Un exemple de telles courbes correspond au phénomène de planage de tôles cintrées. Si X correspond à la flèche et Y à l'écart de contraintes entre les faces supérieures et inférieures de l'axe de ces tôles (ou bandes) et si, de plus, le processus consiste à écraser la tôle pour faire disparaître le cintre, deux cas peuvent se présenter :

- si la flèche initiale est faible, l'écrasement ne conduira qu'à des déformations élastiques, le processus sera réversible, et, pour relier X et Y on pourra utiliser une courbe de type C1 et la courbe de type C2 sera identique à la courbe de type C1 ;
- si la flèche initiale est très importante, il y aura déformation plastique et lors du passage du point A (avant le processus) au point B, X et Y seront reliés par une relation correspondant à la courbe de type C3, en sortie du processus, pour passer de B en C, X et Y seront reliés par une courbe de type C2 telle que représentée sur la figure 2.

A partir de cette figure 2 on voit que, puisque $X_0$ est connu, si on mesure $Y_0$ et soit Y (en A) soit Y' (en B), on peut déterminer X (en A) si il n'y a pas saturation et dans tous les cas X' (en C).

Avec donc au moins une mesure de la deuxième caractéristique dans la zone du point B et au moins une mesure de cette deuxième caractéristique soit avant (en A) soit après (en C), on peut déterminer la première grandeur soit en A soit en B, donc en sortie de ligne.

D'ailleurs, il suffit de connaître la deuxième grandeur en C pour contrôler le produit ou réguler la ligne, car c' est bien le produit tel qu'il sera en aval du processus qui sera fabriqué.

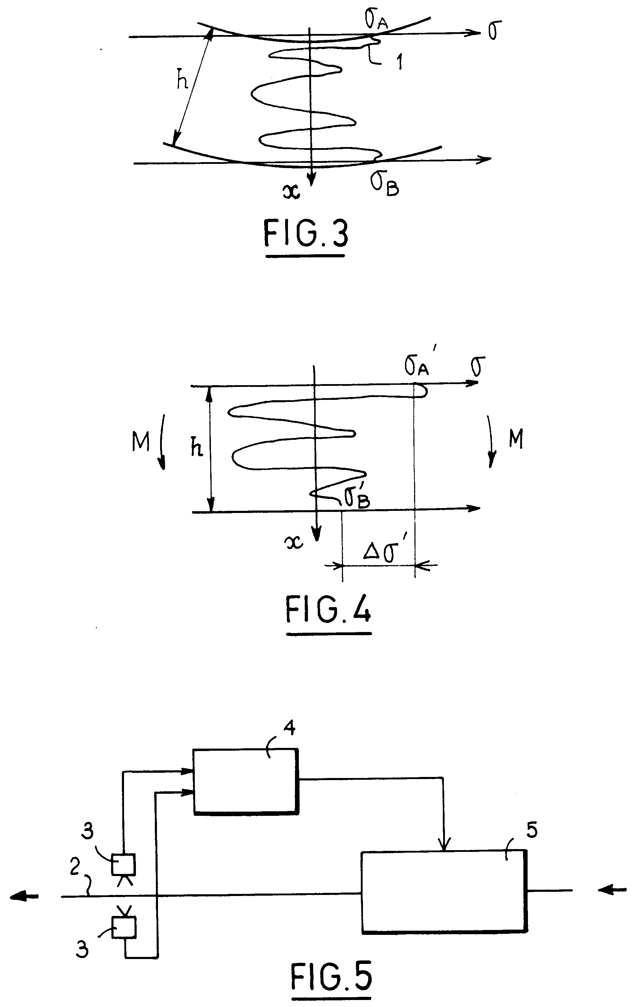

La figure 3 représente une portion de tôle d'acier d'épaisseur $\underline{h}$ après planage sous traction, qui n'est soumise à aucune sollicitation et qui est donc cintrée naturellement en présentant une courbure $\rho$ . La courbe 1 représente les variations des contraintes selon l'épaisseur.

La tôle n'étant soumise à aucune sollicitation:

- l'intégrale des contraintes dans l'épaisseur est nulle (somme des forces extérieures de traction nulles)

$$\int \sigma dx = 0$$

- l'intégrale du produit des contraintes par la distance à une face, dans l'épaisseur est nulle (moment nul)

$$\int \sigma x dx = 0$$

La figure 4 représente la même éprouvette qui est sollicitée par un moment M pour la rendre plate. Dans ces conditions :

$$\int \sigma dx = 0 \text{ forces extérieures de traction nulles}$$

$$\int \sigma x dx = M \text{ moment nécessaire à l'aplatissement.}$$

Si $\sigma_A$ et $\sigma_B$ sont les contraintes en surface à l'état initial (cintré), et $\sigma'_A$ et $\sigma'_B$, les contraintes en surface à l'état final (aplati), un calcul simple de mécaniques montre que $(\sigma'_A-\sigma_A) - (\sigma'_B-\sigma_B)$ est proportionnel au moment M et on peut alors calculer le cintre initial si il n'y a pas eu plastification ou, s'il y a eu plastification, le cintre élastique résiduel qui réapparaîtra lorsque l'on aura relâché les efforts d'aplatissement. On se trouve alors dans le cas le plus général du procédé tel qu'il a été décrit plus haut.

La figure 5 représente schématiquement une tôle laminée 2 en défilement de droite à gauche sur la figure dans le sens indiqué par les flèches. A sa traversée d'une installation de planage sous traction 5, cette tôle est maintenue tendue et défile devant un dispositif 3 de détermination des contraintes superficielles par mesure d'angles de Bragg par diffraction de rayons X sur chacune de ses faces. Les valeurs de contraintes mesurées par le dispositif de mesure 3 sont envoyées à un calculateur 4 qui calcule les valeurs des déformations en cintre ou en tuile que présentera la tôle 2 quand elle sera détendue, c'est-à-dire libre de toute contrainte extérieure. Ces valeurs sont comparées à des valeurs prédéterminées choisies par l'utilisateur et définissant une certaine qualité de planéité ou des tôles spéciales présentant des déformations désirées. Si les valeurs calculées pour les déformations ne correspondent pas aux critères retenus, le calculateur 4 élabore des signaux de réglage qu'il envoie à l'installation 5 de planage sous traction disposée en amont afin que la tôle à venir soit correctement traitée.

La détermination des contraintes superficielles $\sigma_A$, $\sigma_B$ sur chaque face de la bande en mouvement se fait par diffraction des rayons X suivant des principes de base largement publiés et décrits, par exemple dans l'article de G. Maeder "Développements actuels de la détermination des contraintes par diffraction des rayons X" paru dans la revue "Matériaux et techniques" de septembre-octobre 1988 pages 5 à 12.

Cette méthode nécessite l'étude du déplacement et de la forme d'un pic de diffraction correspondant à une famille particulière de plans cristallins. Différentes orientations avec le référentiel de la bande sont à prendre en compte, suivant une génératrice commune pour obtenir une valeur de contraintes, ou suivant plusieurs génératrices pour un tenseur complet.

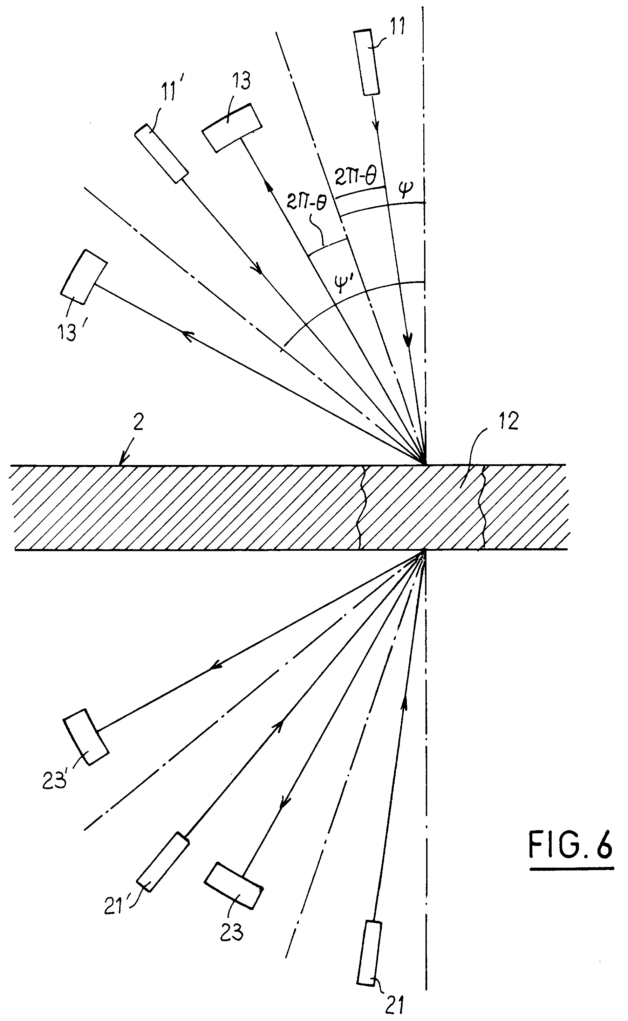

La figure 6 représente en détail le dispositif de mesure 3. Une source 11 de rayons X envoie son faisceau sur une zone 12 d'une des faces de la tôle 2 ; le rayonnement diffracté est reçu par un détecteur 13 qui est disposé sous une orientation différente de celle du détecteur 11 par rapport à la tôle 1, les axes de la source 11 et du détecteur 13 faisant entre eux un angle égal à $\pi$-$2\theta$. L'orientation de l'ensemble de mesure constitué par la source 11 et le détecteur 13 par rapport à la tôle 2 est égale à $\Psi$, qui est l'angle que forme la bissectrice de l'angle entre les axes de la source 11 et du détecteur 13 avec la normale à la tôle 10 au point d'incidence sur la tôle du rayonnement de la source 11. La valeur de l'écart angulaire $\pi$-$2\theta$ est choisie en fonction du plan cristallin du métal retenu comme jauge de déformation. La valeur de l'angle $\Psi$ est déterminée par les conditions de mesure.

Pour une évaluation suffisante et rapide du cintre, on compare les déplacements d'angles de Bragg et les intensités entre les deux faces. Cette comparaison peut être faite avec les dispositifs 11',13',21' et 23' de la figure 6.

Selon une autre forme de l'invention, on réalise des mesures suivant plusieurs angles d'orientation.

Dans un premier mode de réalisation, ceci est réalisé en utilisant plusieurs ensembles emetteur-récepteur 11,13 et 11',13' travaillant avec des angles d'orientation différents $\Psi$ et $\Psi'$. De ces mesures on peut déduire, pour chaque face, une évaluation des contraintes et des états microstructureux.

Selon un autre mode de réalisation, on utilise un seul ensemble émetteur-récepteur monté à orientation variable par rapport à la face du produit.

Avantageusement, on réalise une mesure symétrique sur la face opposée de la tôle 2 au moyen de couples d'émetteurs et de détecteurs 21,23,21' et 23'.

Ces moyens permettent l'acquisition rapide de données exploitées par des algorithmes plus ou moins élaborés suivant le type d'information voulu. Il faut lui fournir au moins :

- pour une évaluation immédiate du cintre : comparaison simple d'une face à l'autre des déplacements d'angles et des intensités mesurées suivant une ou plusieurs orientations (a minima) ;
- pour une caractérisation fine de la déformation superficielle sur chaque face : calcul des contraintes et description de la forme des pics de diffraction suivant (obligatoirement) plusieurs orientations.

Dans le cas où l'on fait une mesure différentielle, c'est-à-dire où l'on dispose de dispositifs de mesure symétriques mesurant chacun des zones sur les faces opposées de la tôle 2, on peut établir une relation liant le rayon de courbure $\rho$ de la déformation, ou sa flèche F, à la valeur différentielle des contraintes existant entre les deux faces.

Si l'on fait l'hypothèse d'une répartition symétrique des contraintes initiales $\sigma_A = \sigma_B$ alors, la mesure directe $\Delta\sigma = \sigma'_A - \sigma'_B$ permet de calculer la flèche par la relation :

$$F = \Delta\sigma . L^2 / 8 \text{ Eh.}$$

où $\Delta\sigma$ est exprimée en Pa ; L représente la longueur de la déformation en mm ; E représente le module d'élasticité, en Pa et h représente l'épaisseur de la tôle, en mm.

On se trouve alors dans le cas particulier du procédé général dans lequel, l'état avant ou après le processus est connu en soi, une seule zone de mesure est suffisante.

Ceci permet alors d'obtenir le rayon de courbure $\rho$, en mm.

$$\rho = \frac{E.h}{\Delta\sigma}$$

On peut s'affranchir de l'hypothèse de symétrie des contraintes initiales en introduisant avant ou après le dispositif d'aplatissement, un deuxième dispositif de mesure de contraintes, c'est le cas le plus général.

Si le cintre initial est faible, l'aplatissement est un processus purement élastique et réversible. On se trouve donc dans le cas de la courbe C1 de la figure 2. On peut mettre le deuxième dispositif de mesure avant ou après le dispositif d'aplatissement.

Si le cintre initial est trop important, au cours de l'aplatissement, il y a déformation plastique et on a un processus avec saturation caractérisé par des courbes de type C3 et C2 de la figure 2. Dans ce cas, il est préférable de placer le deuxième dispositif de mesure après le processus d'aplatissement et non pas avant.

Dans ce cas, la flèche est $F = \Delta\sigma . L^2 / 8 \text{ E.h}$ avec

$$\Delta\sigma = (\sigma'_A - \sigma'_B) - (\sigma_A - \sigma_B)$$

Grâce à ces calculs, on peut ensuite déterminer les réglages à effectuer sur l'installation de planage 5 de manière à obtenir la qualité de planéité désirée.

On peut également prévoir une installataion de planage sous traction supplémentaire en aval pour corriger les défauts globaux de planéité de la tôle même que l'on vient d'inspecter, le résultat de cette installation de planage sous traction corrective variant en fonction des écarts mesurés grâce au dispositif de mesure 3.

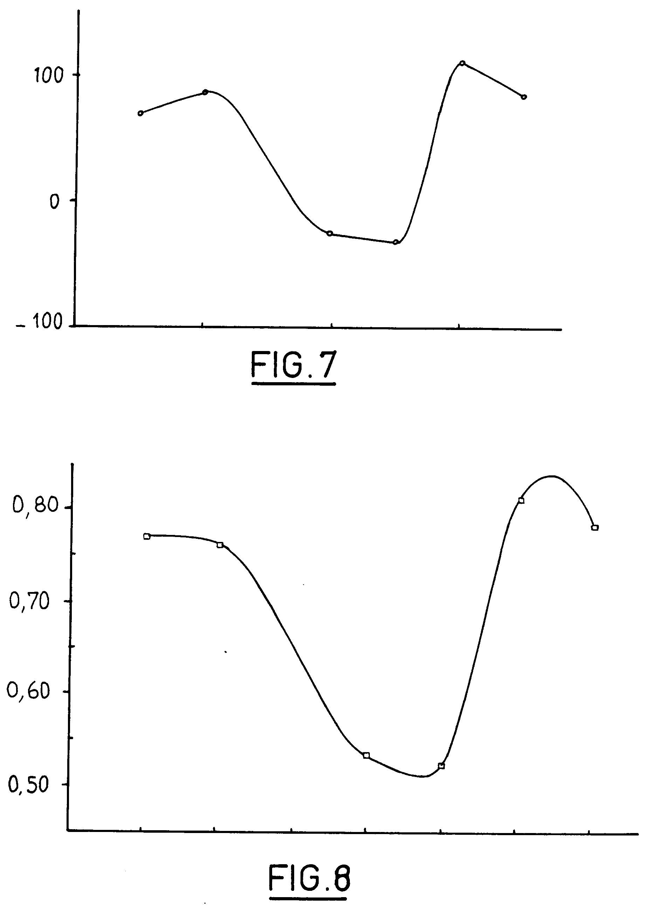

Comme on peut le voir sur la figure 7, qui est une courbe représentant la valeur de la mesure différentielle de la contrainte sur une portion de tôle comportant un premier cintre positif de 3 cm puis un cintre négatif de moins 5 cm suivi d'un cintre positif de 3,5 cm, la mesure différentielle de la contrainte fournit une image de la déformation de la tôle lorsqu'elle n'est pas soumise à une tension. Les mesures de cintre ont été en effet effectuées après découpe de la tôle en aval du dispositif de mesure.

Les détecteurs utilisés pour la mesure de la contrainte peuvent par exemple être constitués par des détecteurs de type connu à fentes de Sollers, tels que ceux fabriqués par la société japonnaise Rigaku. Dans ces appareils, on détecte tout d'abord une pointe de diffraction qui fournit une valeur d'angle de Bragg qui est utilisée pour déterminer la contrainte.

Selon une variante de l'invention, on mesure directement, comme deuxième caractéristique, l'angle de Bragg et on réalise également une mesure différentielle entre les deux faces de la tôle. Comme on peut le voir sur la figure 8, qui représente la mesure différentielle de l'angle de Bragg pour le même profil de tôle que celui de la figure 7, la valeur de la mesure différentielle de l'angle de Bragg fournit aussi une mesure représentative des défauts de planéité de la tôle.

Avantageusement, la mesure de l'angle de Bragg est réalisée avec un angle d'orientation de l'ensemble de mesure compris entre 35 et 60°, valeur pour laquelle la sensibilité de la mesure différentielle de l'angle de Bragg est particulièrement élevée et l'intensité diffractée importante.

Pour améliorer la rapidité de la mesure, on peut avantageusement utiliser un détecteur linéaire, par exemple un détecteur linéaire comportant 220 canaux qui définissent un pic de diffraction sur une plage angulaire de 20°. Un tel détecteur permet également d'améliorer la précision ; ainsi par exemple on peut obtenir une précision de 0,03° sur la position du pic de diffraction, la mesure étant effectuée en dix secondes. Cette précision entraîne une évaluation du cintre à 1,5 cm près.

La mesure différentielle de l'angle de Bragg avec de tels détecteurs linéaires est relativement sensible aux écarts de hauteur de la tôle. On a réalisé par exemple une mesure statique en réalisant des battements de 2 mm d'amplitude et de 3 Hz de fréquence et on a constaté une perte de précision de l'ordre de 0,01°. Pour améliorer la précision de la mesure, l'invention prévoit de mesurer en temps réel les variations de position de la tôle dans la zone de mesure et de faire une correction correspondante sur la mesure différentielle de l'angle de Bragg qui a été mesurée.

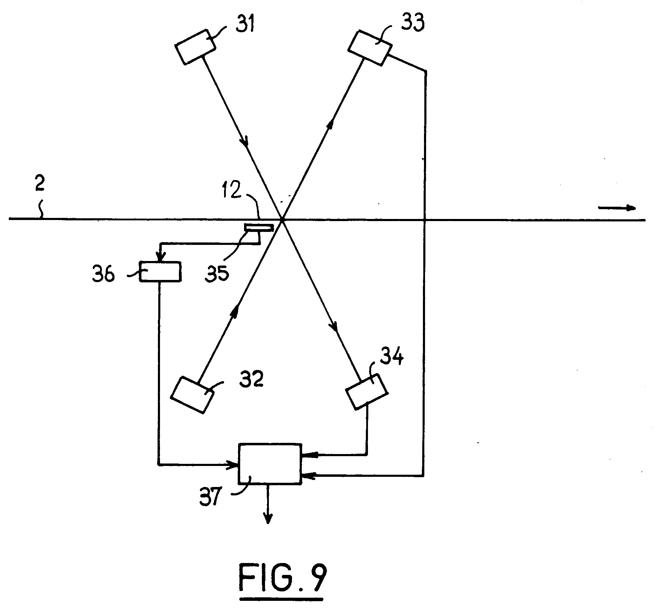

On a représenté schématiquement sur la figure 9 un dispositif de ce genre ; on retrouve la tôle 2 et les deux ensembles émetteur-capteur disposés de part et d'autre de cette dernière à savoir les deux émetteurs 31 et 32 et les deux capteurs linéaires 33 et 34.

Conformément à un mode de réalisation de l'invention, on dispose dans la zone de mesure 12 un dispositif de mesure de la position de la tôle constituée par exemple par un capteur capacitif 35 couplé à un appareil de mesure 36 fournissant la valeur de la hauteur de la tôle 2 par rapport à une position moyenne. Les mesures fournies par les deux détecteurs 33 et 34 et la mesure fournie par l'appareil de mesure 36 sont envoyées à un calculateur 37 qui fournit en sortie une valeur corrigée de la valeur différentielle de l'angle de Bragg.

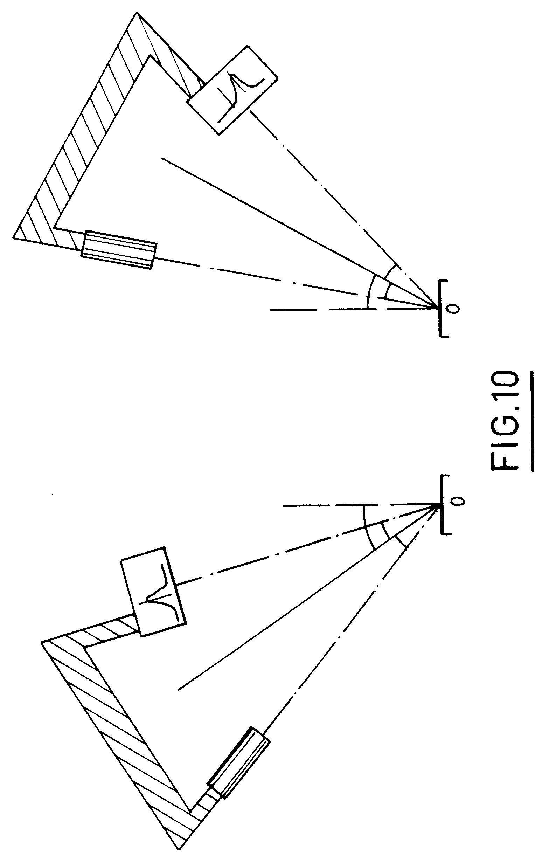

La figure 10 est le schéma de principe d'une variante de réalisation de l'invention utilisant des détecteurs linéaires dans laquelle on effectue un montage en oméga des ensembles de mesures émetteurs-détecteurs ; un tel montage permet, par rapport au montage $\Psi$, de diviser par quatre la sensibilité aux écarts de hauteur et d'intégrer la mesure du différentiel de contraintes sur une épaisseur plus importante.

Par ailleurs, la sensibilité étant proportionnelle à l'inverse de la distance des capteurs par rapport à la tôle, en augmentant la distance de ce dernier par rapport à la tôle, on peut obtenir un dispositif qui permet de détecter une variation de cintre en ligne de l'ordre de 3 mm.

On voit que l'invention permet de réaliser de manière simple le contrôle de la planéité de produits de laminage soumis à une opération de planage sous traction. Cela permet soit de fournir des tôles bien planes ou présentant des caractéristiques de courbure prédéterminées.

En particulier, en utilisant des détecteurs linéaires fixes, on peut obtenir un temps de réponse suffisamment rapide pour réaliser une régulation.

## Revendications

1. Procédé non destructif de détection ou de mesure en ligne d'au moins une caractéristique physique ou géométrique (X) difficilement mesurable d'un produit (2) fabriqué en continu sous forme de bande, profilé, fil ou analogue, tel qu'un produit métallurgique, selon lequel :

   - on choisit les contraintes superficielles comme une deuxième caractéristique physique ou géométrique (Y) du produit qui soit aisément mesurable en continu et dont les variations sont, de manière connue, corrélées à celles de ladite première caractéristique (X) ladite première caractéristique étant la planéité du produit;
   - par un moyen agissant sur le produit (2), en une zone déterminée (B) de la ligne de fabrication, on modifie la planéité (X) de façon de l'amener à un état de référence prédéterminé connu $(X_0)$;
   - on fait, dans ladite zone (B), une première mesure de lesdites contraintes superficielles (Y) et, le cas échéant soit avant, soit après ladite zone, une deuxième mesure de lesdites contraintes superficielles (Y) si elles n'ont pas de valeurs connues en soi en dehors de ladite zone ;
   - on effectue un traitement desdites premières et deuxième mesures pour déterminer une variation de la planéité par rapport audit état de référence, ceci permettant de déterminer la planéité soit avant, soit après ladite zone, selon que la deuxième mesure a été faite avant ou après-cette zone.

2. Procédé selon la revendication 1, caractérisé en ce que, les contraintes superficielles ayant de valeurs connues en soi, avant ou après la zone correspondant à l'état de référence $(X_0)$ de la planéité l'on effectue seulement une première mesure des contraintes superficielles (Y) dans ladite zone, le traitement étant effectué uniquement sur ladite première mesure.

3. Procédé selon la revendication 1, caractérisé en ce que l'on fait au moins deux mesures des contraintes superficielles (Y) en deux points différents de ladite zone de mesure (B) et en ce que l'on effectue au moins un traitement sur chacune desdites deux mesures.

4. Procédé selon la revendication 1, caractérisé en ce que l'on effectue au moins deux mesures des contraintes superficielles en deux points différents de ladite zone (B), en ce que chacune des mesures fait l'objet d'un traitement adapté et en ce que les résultats obtenus par ces traitements sont traités pour caractériser la variation de la planéité.

5. Procédé de contrôle en continu d'un produit sous forme de bande, profilés, fils ou analogue en sortie d'un processus de traitement en continu caractérisé en ce que l'on détermine la planéité du produit en utilisant un procédé selon l'une quelconque des revendications 1 à 4.

6. Procédé de régulation d'une installation de traitement en continu d'un produit sous forme de bande, profilé, fil ou analogue, destiné à réguler la planéité du produit, caractérisé en que l'on utilise le procédé selon la revendication 5 pour générer un signal de commande de ladite installation de traitement en continu.

7. Procédé de contrôle et/ou de régulation de la planéité globale d'un produit de laminage, tel qu'une bande d'acier ayant subi une opération de planage, caractérisé en ce que l'on mesure des contraintes superficielles ($\sigma$) du produit en appliquant le procédé selon la revendication 1, le processus de mise à l'état de référence étant un aplatissement de la bande, et en ce que l'on détermine une valeur représentative du cintre ou de la tuile à partir desdites mesures.

8. Procédé selon la revendication 7, caractérisé en ce que la mesure est effectuée sur les deux faces du produit de laminage dans la même zone (12) correspondant à l'état de référence ($X_0$) de la planéité et en ce que l'on détermine une valeur différentielle de la contrainte.

9. Procédé selon la revendication 7, caractérisé en ce que l'on effectue la mesure selon plusieurs orientations angulaires sur la même zone (12) correspondant à l'état de référence ($X_0$) de la planéité.

10. Procédé selon l'une quelconque des revendications 7 à 9, caractérisé en ce que les contraintes superficielles ($\sigma$) sont déterminées en mesurant au moins une grandeur significative de la diffraction des rayons X.

11. Procédé selon la revendication 10, caractérisé en ce que l'on mesure l'angle de Bragg sur les deux faces du produit et que l'on évalue une valeur différentielle de l'angle de Bragg représentative du différentiel de contraintes sur les deux faces.

12. Procédé selon la revendication 11 , caractérisé en ce que l'on mesure les variations de position du produit de laminage dans ladite zone (12) et que l'on effectue une correction sur les valeurs mesurées de l'angle de Bragg pour les deux faces.

13. Dispositif de mesure la planéité d'un produit fabriqué en continu sous forme de bande destiné notamment à la mise en oeuvre du procédé selon l'une quelconque des revendications 10 à 12, caractérisé en ce qu'il comporte, des moyens d'aplatissement du produit (2) pour l'amener à un état de référence en une zone déterminée (B) de la ligne de fabrication des moyens de mesure des contraintes superficielles d'un produit (2) fabriqué en continu sous forme de bande dans ladite zone, le cas échéant, des deuxième moyens de mesure des contraintes superficielles soit avant, soit après ladite zone (B) si lesdites contraintes superficielles n'ont pas de valeurs connus en dehors de ladite zone, et des moyens de traitement de valeurs des contraintes superficielles dans et en dehors de ladite zone (B) en vue de la détermination d'une variation des contraintes superficielles par rapport à l'état de référence et donc d'une variation de la planéité du produit, lesdits moyens de mesure des contraintes superficielles comportant un détecteur à fente de Sollers.

14. Dispositif selon la revendication 13 dans lequel le détecteur à fente de Sollers est remplacé par des détecteurs linéaires de rayon X, pour mesurer une valeur différentielle de l'angle de Bragg représentatives du différentiel des contraintes sur les deux faces du produit.

15. Dispositif selon l'une des revendications 13 et 14, caractérisé en ce que l'ensemble de la source (11,11',21,21') de rayons X et du détecteur (13,13',23, 23') est monté à orientation variable par rapport à la face du produit (2).

16. Dispositif selon l'une quelconque des revendications 13 à 15, caractérisé en ce qu'il comporte plusieurs ensembles source-détecteur (11,13;11',13'; 21,23;21',23') disposés de manière fixe sous des orientations différentes.

## Claims

1. Non-destructive method for on-line detection or measurement of at least one physical or geometrical characteristic (X) which is difficult to measure of a product (2) manufactured continuously in the form of a strip, profiled section, or the like, such as a metallurgical product, according to which:

   - surface stresses are selected as a second product characteristic (Y) which can be measured easily and continuously and the variations of which are correlated in a known manner with those of the said first characteristic (X), the said first characteristic being the flatness of the product;

   - the flatness (X) is modified by a means acting on the product (2) in a manner such as to bring it to a predetermined known reference state ($X_0$) in a predetermined zone (B) of the production line;

   - a first measurement of the said surface stresses (Y) is made in the said zone (B) and, if neccessary, a second measurement of the said surface stresses (Y) is made either upstream or downstream of the said zone, if they are not of values known per se outside the said zone;

- the said first and second measurements are processed to determine a variation of the flatness relative to the said reference state, permitting determination of the flatness either upstream or downstream of the said zone, according to whether the second measurement was made upstream or downstream of this zone.

2. Method according to Claim 1, characterized in that, the surface stresses having values known per se upstream or downstream of the zone corresponding to the flatness reference state ($X_0$), only a first measurement of the surface stresses (Y) is made in the said zone, the processing being carried out solely on the said first measurement.

3. Method according to Claim 1, characterized in that at least two measurements of the surface stresses (Y) are made at two different points of the said measurement zone (B) and in that at least one processing operation is performed on each of the said two measurements.

4. Method according to Claim 1, characterized in that at least two measurements of the surface stresses are made at two different points of the said zone (B), in that each of the measurements undergoes suitable processing, and in that the results obtained by this processing are processed in order to characterize the flatness.

5. Method of continuously checking a product in the form of a strip, profiled section, or the like output from a continuous process, characterized in that the flatness of the product is determined with the use of a method according to any one of Claims 1 to 4.

6. Method of regulating a plant for continuous processing of a product in the form of a strip, profiled section, or the like for regulating the flatness or the product, characterized in that a method according to Claim 5 is used to generate a control signal for the said continuous processing plant.

7. Method of checking and/or regulating the overall flatness of a rolling product such as a steel strip which has undergone a smoothing operation, characterized in that surface stresses ($\sigma$) of the product are measured by the application of the method according to Claim 1, the method of establishing the reference state being a flattening of the strip, and in that a value representative of the arching or of the curvature is determined from the said measurements.

8. Method according to Claim 7, characterized in that the measurement is made on the two faces of the rolling product in the same zone (12) corresponding to the flatness reference state ($X_0$), and in that a differential stress value is determined.

9. Method according to Claim 7, characterized in that the measurement is made at several angular orientations on the same zone (12) corresponding to the flatness reference state ($X_0$).

10. Method according to any one of Claims 7 to 9, characterized in that the surface stresses ($\sigma$) are determined by measurement of at least one quantity indicative of X-ray diffraction.

11. Method according to Claim 10, characterized in that the Bragg angle is measured on the two faces of the product, and in that a differential value of the Bragg angle representative of the differential of stresses on the two faces is evaluated.

12. Method according to Claim 11, characterized in that the variations of the position of the rolling product in the said zone (12) are measured and in that a correction is made on the measured Bragg angle values for the two faces.

13. Apparatus for measuring the flatness of a product manufactured continuously in strip form, particularly for implementing the method according to any one of Claims 10 to 12, characterized in that it comprises means for flattening the product (2) to bring it to a reference state in a predetermined zone (B) of the production line, means for measuring, in the said zone, the surface stresses of a product (2) manufactured continuously in strip form, if necessary, second means for measuring surface stresses either upstream or downstream of the said zone (B) if the said surface stresses do not have known values outside the said zone, and means for processing values of the surface stresses inside and outside the said zone (B) in order to determine a variation of the surface stresses relative to the reference state and hence a variation in the flatness of the product, the said means for measuring the surface stresses comprising a Sollers slit detector.

14. Apparatus according to Claim 13 in which the Sollers slit detector is replaced by linear X-ray detectors for measuring a differential value of the Bragg angle representative of the differential of the stresses on the two faces of the product.

15. Apparatus according to any one of Claims 13 and 14, characterized in that the assembly of the X-ray source (11, 11', 21, 21') and of the detector (13, 13', 23, 23') is mounted in a variable orientation relative to the face of the product.

16. Apparatus according to any one of Claims 13 to 15, characterized in that it comprises several source-detector assemblies (11, 13; 11', 13'; 21, 23, 21', 23') arranged in a fixed manner in different orientations.

**Patentansprüche**

1. Verfahren zur zerstörungsfreien Ermittlung oder zur On-line-Messung von zumindest einer schwer meßbaren physikalischen oder geometrischen Eigenschaft (X) eines Produkts (2), das kontinuierlich in Band-, Profil-, Draht- oder dergleichen Form hergestellt wird, wie etwa eines metallurgischen Produkts, aufweisend die Schritte:

   - Messen künstlicher Spannungen als ein zweites physikalisches oder geometrisches Merkmal (Y) des Produkts, die problemlos kontinuierlich meßbar sind, und deren Schwankungen bzw. Variationen in an sich bekannter Weise mit denjenigen der ersten Eigenschaft (X) korreliert sind, wobei die erste Eigenschaft die Planheit des Produkts ist;
   - Modifizieren der Planheit (X) derart, daß sie in einen bekannten vorbestimmten Referenzzustand ($X_0$) überführt wird, durch ein Mittel, das auf das Produkt (2) in einer bestimmten Zone (B) der Fertigungsstrecke einwirkt,
   - Durchführen einer ersten Messung der künstlichen Spannungen (Y) in der Zone (B), und gegebenenfalls entweder vor oder nach dieser Zone einer zweiten Messung der künstlichen Spannungen (Y), wenn sie keine an sich bekannten Werte außerhalb der Zone aufweisen,
   - Ausführen einer Verarbeitung der ersten und zweiten Messungen, um eine Variation bzw. Veränderung der Ebenheit in bezug auf den Referenzzustand zu ermitteln, wodurch die Planheit entweder vor oder nach der Zone ermittelt werden kann, und zwar wenn die zweite Messung vor oder nach dieser Zone erfolgt ist.

2. Verfahren nach Anspruch 1, dadurch gekennzeichnet, daß, wenn, die künstlichen Spannungen an sich bekannte Werte aufweisen, vor oder nach der Zone entsprechend dem Referenzzustand ($X_0$) der Planheit ausschließlich eine erste Messung künstlicher Spannungen (Y) in dieser Zone durchgeführt werden, wobei die Verarbeitung ausschließlich für die erste Messung durchgeführt wird.

3. Verfahren nach Anspruch 1, dadurch gekennzeichnet, daß zumindest zwei Messungen der künstlichen Spannungen (Y) an zwei unterschiedlichen Punkten der Meßzone (B) durchgeführt werden, und daß zumindest eine Verarbeitung an jeder der zwei Messungen durchgeführt wird.

4. Verfahren nach Anspruch 1, dadurch gekennzeichnet, daß zumindest zwei Messungen der künstlichen Spannungen an zwei unterschiedlichen Punkten der Meßzone (B) durchgeführt werden, und daß jede der Messungen Gegenstand einer angepaßten Verarbeitung bildet, und daß die durch die Verarbeitungen erhaltenen Ergebnisse verarbeitet werden, um die Variation bzw. Schwankung der Planheit zu charakterisieren.

5. Verfahren zum kontinuierlichen Steuern eines Produkts in Band-, Profil- oder Draht- oder dergleichen Form am Ende eines kontinuierlichen Verarbeitungsprozesses, dadurch gekennzeichnet, daß die Planheit des Produkts unter Anwendung des Verfahrens nach einem der Ansprüche 1 bis 4 ermittelt wird.

6. Verfahren zum Regeln einer kontinuierlichen Verarbeitungsanlage für ein Produkt in Band-, Profil-, Draht- oder dergleichen Form, das dazu bestimmt ist, die Planheit des Produkts zu regeln, dadurch gekennzeichnet, daß das Verfahren gemäß Anspruch 5 angewendet wird, um ein Steuersignal für die kontinuierliche Verarbeitungsanlage zu erzeugen.

7. Verfahren zum Steuern und/oder Regeln der globalen Planheit eines Walzprodukts, wie etwa eines Stahlbands, das einem Planiervorgang unterworfen wird, dadurch gekennzeichnet, daß die künstlichen Spannungen ($\sigma$) des Produkts gemessen werden, indem das Verfahren gemäß Anspruch 1 angewendet wird, wobei der Prozeß zum Bereitstellen der Referenz das Planieren des Bands ist, und daß ein Wert ermittelt wird, der für die Wölbung oder die Wellung repräsentativ ist, und zwar ausgehend von diesen Messungen.

8. Verfahren nach Anspruch 7, dadurch gekennzeichnet, daß die Messung auf zwei Oberflächen des Wälzprodukts in derselben Zone (12) entsprechend dem Bezugszustand für die Planheit ausgeführt wird, und daß ein differentieller Wert für die Spannung ermittelt wird.

9. Verfahren nach Anspruch 7, dadurch gekennzeichnet, daß die Messung entlang mehreren Winkelorientierungen in derselben Zone (12) entsprechend dem Referenzzustand ($X_0$) der Planheit durchgeführt wird.

10. Verfahren nach einem der Ansprüche 7 bis 9, dadurch gekennzeichnet, daß die künstlichen Spannungen ($\sigma$) ermittelt werden, indem zumindest eine signifikante Größe der Röntgenstrahlbeugung gemessen wird.

11. Verfahren nach Anspruch 10, dadurch gekennzeichnet, daß der Bragg-Winkel auf beiden Seiten bzw. Oberflächen des Produkts gemessen wird, und daß ein differentieller Wert des Bragg-Winkels erfaßt wird, der für die differentiellen Spannungen auf den zwei Oberflächen repräsentativ ist.

12. Verfahren nach Anspruch 11, dadurch gekennzeichnet, daß die Schwankungen bzw. Variationen der Position des Wälzprodukts in der Zone (12) gemessen werden, und daß eine Korrektur der gemessenen Werte des Bragg-Winkels für die zwei Oberflächen durchgeführt wird.

13. Vorrichtung zum Messen der Planheit eines Produkts, das kontinuierlich in Bandform hergestellt wird, und insbesondere zur Durchführung des Verfahrens nach einem der Ansprüche 10 bis 12 bestimmt ist, dadurch gekennzeichnet, daß sie Mittel zum Planieren des Produkts (2) aufweist, um es in einen Referenzzustand zu überführen, und zwar aus einer bestimmten Zone (B) der Fertigungsstrecke, Mittel zum Messen der künstlichen Spannungen eines Produkts (2), das kontinuierlich in Bandform in dieser Zone hergestellt wird, gegebenenfalls zweite Mittel zum Messen der künstlichen Spannungen entweder vor oder nach der Zone (B), wenn die künstlichen Spannungen außerhalb der Zone keine bekannten Werte haben, und Mittel zum Verarbeiten der Werte der künstlichen Spannungen innerhalb sowie außerhalb der Zone (B) im Hinblick auf die Ermittlung einer Schwankung bzw. Variation der künstlichen Spannungen in bezug auf den Referenzzustand und damit einer Variation bzw. Schwankung der Planheit des Produkts, wobei die Mittel zum Messen der künstlichen Spannungen einen Sollers-Schlitzdetektor aufweisen.

14. Vorrichtung nach Anspruch 13, wobei der Sollers-Schlitzdetektor durch lineare Röntgendetektoren ersetzt ist, um einen differentiellen Wert des Bragg-Winkels zu messen, der für das Differential der Spannungen auf den zwei Oberflächen des Produkts repräsentativ ist.

15. Vorrichtung nach einem der Ansprüche 13 und 14, dadurch gekennzeichnet, daß der Aufbau aus der Röntgenstrahlquelle (11, 11', 21, 21') und dem Detektor (13, 13', 23, 23') mit variabler Orientierung in bezug auf die Oberfläche des Produkts (2) angebracht ist.

16. Vorrichtung nach einem der Ansprüche 13 bis 15, dadurch gekennzeichnet, daß sie mehrere Quellen-Detektorenaufbauten (11, 13; 11', 13'; 21, 23; 21', 23') aufweist, die in feststehender Weise mit unterschiedlicher Orientierung angeordnet sind.

FIG. 1

FIG. 2

FIG.3

FIG.4

FIG.5

FIG.6

FIG.7

FIG.8

## FIG.9

FIG.10